(19) Europäisches Patentamt
European Patent Office
Office européen des brevets

(11) **EP 3 009 669 B1**

(12) **EUROPEAN PATENT SPECIFICATION**

(45) Date of publication and mention
of the grant of the patent:
**10.05.2017 Bulletin 2017/19**

(51) Int Cl.:
***F03D 1/06*** <sup>(2006.01)</sup>

(21) Application number: **15177577.2**

(22) Date of filing: **20.07.2015**

(54) **TRAILING EDGE SIDE PANEL**

HINTERKANTENSEITENPANEEL

PANNEAU LATÉRAL DE BORD DE FUITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.10.2014 JP 2014212593**

(43) Date of publication of application:
**20.04.2016 Bulletin 2016/16**

(73) Proprietor: **MITSUBISHI HEAVY INDUSTRIES,
LTD.
Tokyo 108-8215 (JP)**

(72) Inventor: **FUKAMI, Koji
TOKYO, 108-8215 (JP)**

(74) Representative: **Intès, Didier Gérard André et al
Cabinet Beau de Loménie
158 rue de l'Université
75340 Paris Cedex 07 (FR)**

(56) References cited:
**EP-A2- 1 338 793    GB-A- 2 469 854
US-A- 5 088 665    US-A1- 2012 027 590**

**Description**

BACKGROUND OF THE INVENTION

1. Field of the invention

The present invention relates to a trailing edge side panel to be attached to a trailing edge side of a wind turbine blade.

2. Description of the Related Art

In recent years, wind turbine generators using wind power have gained popularity, in view of global environmental conservation. A wind turbine generator converts wind kinematic energy into rotational energy of a wind turbine rotor, including a wind turbine blade and a hub, and converts the rotational energy into electrical energy with a generator.
U.S. Unexamined Patent Application Publication No. 2003-0099546 and U.S. Unexamined Patent Application Publication No. 2013-0129519 disclose a structure of attaching a panel having a trailing edge formed to have serrations to a trailing edge side of the wind turbine blade, to reduce noise of the wind turbine blade and improve the efficiency of the wind turbine blade. Another example is disclosed in US Unexamined Patent Application Publication No 2012-0027590.

SUMMARY OF THE INVENTION

When the panel having the trailing edge formed to have serrations is attached to the trailing edge side of the wind turbine blade, a chord length of the wind turbine blade is extended. When this results in the chord length extended to be largely deviated from the optimum chord length (the chord length that can achieve the maximum blade efficiency) which has been achieved before the chord length is extended, the blade efficiency is degraded. This is particularly the case when the chord length of the wind turbine blade has already been a substantially optimum chord length. More specifically, by attaching the trailing edge side panel, the chord length becomes longer than the optimum chord length, thereby degrading the blade efficiency.
However, U.S. Unexamined Patent Application Publication No. 2003-0099546 and U.S. Unexamined Patent Application Publication No. 2013-0129519 do not disclose a specific structure of the trailing edge side panel that can be attached without causing extending of the chord length of the wind turbine blade involving deviation from the optimum chord length.
In view of the above, an object of at least one embodiment of the present invention is to provide a trailing edge side panel that can reduce the noise of the wind turbine blade and at the same time can achieve the excellent blade efficiency by preventing the deviation from the optimum length.

(1) A trailing edge side panel according to at least one embodiment of the present invention is a trailing edge side panel configured to be attached to a trailing edge side of a wind turbine blade of a wind turbine rotor, the trailing edge side panel including: a panel suction surface which is disposed adjacent to a suction surface of the wind turbine blade in a state where the trailing edge side panel is attached to the trailing edge side of the wind turbine blade; a panel pressure surface which is disposed adjacent to a pressure surface of the wind turbine blade in the state where the trailing edge side panel is attached to the trailing edge side of the wind turbine blade; and a panel trailing edge where the panel suction surface and the panel pressure surface intersect with each other. The panel trailing edge has serrations. In the state where the trailing edge side panel is attached to the trailing edge side of the wind turbine blade, in a cross section, orthogonal to a blade longitudinal direction, of at least a partial area in the blade longitudinal direction, the panel trailing edge is positioned on a suction surface side of a first airfoil defined by a contour of the wind turbine blade with respect to an extension line that virtually extends from the trailing edge of the wind turbine blade as an extension of a camber line of the first airfoil, and a camber line of a second airfoil defined by an entire contour of the wind turbine blade and the trailing edge side panel has an S shape defined by a first curved portion and a second curved portion, the first curved portion being positioned on a leading edge side of the wind turbine blade and protruding toward a suction side, the second curved portion being positioned on a panel trailing edge side with respect to the first curved portion and protruding toward a pressure side.
To maximize the blade efficiency, the airfoil of the wind turbine blade preferably satisfies the following relation (1a):

$$N \times \frac{C}{R} \times C_{Ldesign} \times \frac{r}{R} \times \lambda^2 = \frac{16}{9}\pi \quad (1a),$$

where N is the number of wind turbine blades of the wind turbine rotor, C is the chord length, R is a radius of rotation of the wind turbine rotor, $C_{Ldesign}$ is a design lift coefficient (a lift coefficient at an angle of attack with the maximum lift-to-drag ratio), r is a radius direction position of the wind turbine rotor, and $\lambda$ is a design tip speed ratio (ratio of a tip speed Ts at the tip of the wind turbine blade to an infinite upstream wind speed V).

At a radial direction position of the wind turbine blade, all the items other than C and $C_{Ldesign}$ are constant, and thus the formula can be simplified into the following formula:

$$C \times C_{Ldesign} = \text{constant (1b)}.$$

Thus, the combination between the chord length C and the design lift coefficient $C_{Ldesign}$ that satisfies Formula (1b) is preferably selected to maximize the performance of the wind turbine blade.

The trailing edge side panel including the panel trailing edge formed to have the serrations can reduce the noise of the wind turbine blade. Here, the trailing edge side panel needs to extend the chord length C for a certain amount, to provide the noise reduction effect.

Thus, if the extended amount of chord length C is set to an amount with which the noise reduction effect can be provide with the design lift coefficient $C_{Ldesign}$ fixed, the left member in Formula (1b) is increased, and thus Formula (1b) might be failed to be satisfied.

Thus, the trailing edge side panel described in (1) described above has the following configuration: "in the state where the trailing edge side panel is attached to the trailing edge side of the wind turbine blade, in a cross section, orthogonal to the blade longitudinal direction, of at least a partial area in the blade longitudinal direction, the panel trailing edge is positioned on a suction surface side of a first airfoil defined by a contour of the wind turbine blade with respect to an extension line that virtually extends from the trailing edge of the wind turbine blade as an extension of a camber line of the first airfoil, and a camber line of a second airfoil defined by an entire contour of the wind turbine blade and the trailing edge side panel has an S shape defined by a first curved portion and a second curved portion, the first curved portion being positioned on a leading edge side of the wind turbine blade and protruding toward a suction side, the second curved portion being positioned on a panel trailing edge side with respect to the first curved portion and protruding toward a pressure side".

Thus, the turning angle of the second airfoil becomes smaller than the turning angle of the first airfoil, whereby the design lift coefficient $C_{Ldesign}$ is reduced. Thus, even when the extended amount of the chord length C is set to an amount with which the noise reduction effect can be provided, the left member in Formula (1b) can be prevented from increasing, whereby the difference between the left and the right members in Formula (1b) can be made small. All things considered, the excellent blade efficiency can be achieved.

On the other hand, if the trailing edge side panel is formed in such a manner that if the panel trailing edge is positioned on the extension line L1 of the camber line of the first airfoil, or if the panel trailing edge is positioned on the pressure surface side of the first airfoil with respect to the extension line L1, the turning angle becomes large, and thus the design lift coefficient $C_{Ldesign}$ becomes large. As a result, the left member of Formula (1b) largely increases along the increase in the chord length C, and thus a large deviation from Formula (1b) occurs.

Furthermore, if the trailing edge side panel having a flat plate shape is attached to the trailing edge of the wind turbine blade to extend on the chord extension line from the trailing edge of the wind turbine blade, the camber line is bent at the trailing edge of the wind turbine blade and thus, what value the design lift coefficient $C_{Ldesign}$ takes cannot be predicted, and the design lift coefficient $C_{Ldesign}$ might not be reduced depending on the shape of the trailing edge side panel. In other words, how the aerodynamic performance changes when the trailing edge side panel is attached is unknown.

Because the turning angle of the second airfoil is smaller than the turning angle of the first airfoil in the configuration described in (1) described above, the maximum lift coefficient (lift coefficient at the time of speed down) $C_{Lmax}$ can be prevented from increasing. Thus, a wind load applied to the wind turbine blade from the wind can be prevented from increasing. Furthermore, the flowrate is high at a portion around the panel trailing edge on the panel suction surface side, and thus the thickness of the boundary layer can be prevented from increasing, whereby the noise can be reduced.

(2) In some embodiments, in the trailing edge side panel according to (1) described above, the panel suction surface is curved to have a concave shape in the cross section orthogonal to the blade longitudinal direction.

In the trailing edge side panel according to (2) described above, the panel suction surface is curved to have a concave shape in the cross section orthogonal to the blade longitudinal direction. Thus, the suction surface of the wind turbine blade and the panel trailing edge can be smoothly connected to each other, and the panel trailing edge can be positioned at the positioned described in (1) described above. As a result, the effects according to (1) described above (the noise of the wind turbine blade is reduced, the excellent blade efficiency is achieved, and the wind load is prevented from increasing) can be obtained, while preventing the separation at the panel suction surface.

(3) In some embodiments, in the trailing edge side panel according to (2) described above, the panel pressure surface is curved to have a convex shape in the cross section orthogonal to the blade longitudinal direction.

In the trailing edge side panel according to (3) described above, the panel pressure surface is curved to have a convex shape in the cross section orthogonal to the blade longitudinal direction. Thus, the pressure surface of the wind turbine blade and the panel trailing edge can be smoothly connected to each other, and a certain amount of blade thickness can be ensured between the panel suction surface having the concave shape and the panel pressure surface having the convex shape. All things considered, the effects according to (2) described above (separation at the panel suction surface is prevented from occurring and effects according to (1)) can be obtained, while achieving an excellent structural strength.

(4) In some embodiments, in the trailing edge side panel according to any one of (1) to (3) described above, in the cross section orthogonal to the blade longitudinal direction in the state where the trailing edge side panel is attached to the trailing edge side of the wind turbine blade, an angle $\alpha$ is equal to or larger than 2°, the angle $\alpha$ being an angle between the extension line and a straight line that passes through the trailing edge of the wind turbine blade and the panel trailing edge.

As a result of studying, the present inventor has found that by setting the angle $\alpha$ to be not less than 2° as described in (4) described above, the design lift coefficient $C_{Ldesign}$ is reduced by a certain amount. Thus, even when the extended amount of the chord length C is set to an amount with which the noise reduction effect can be obtained, the left member in Formula (1b) can be prevented from increasing. Thus, the difference between the left and the right members in Formula (1b) can be reduced to a certain level, whereby the excellent blade efficiency can be achieved.

(5) In some embodiments, in the trailing edge side panel according to (4) described above, in the cross section orthogonal to the blade longitudinal direction in the state where the trailing edge side panel is attached to the trailing edge side of the wind turbine blade, a value x is larger than 0.05 and the angle $\alpha$ is larger than 2°, the value x being a value obtained by diving 1/3 of a distance $C_s$ by a chord length C of the wind turbine blade, the distance $C_s$ being a distance between an apex of each serration at the panel trailing edge and the trailing edge of the wind turbine blade in a chord direction of the wind turbine blade.

The extended amount of the chord length of the wind turbine blade, due to the attaching of the trailing edge side panel having the trailing edge side panel having the serrations, can be approximated by 1/3 of the distance $C_s$ between an apex of each serration at the panel trailing edge and the trailing edge of the wind turbine blade. As a result of studying, the present inventor has found that when the value x, as a value obtained by diving 1/3 of the distance $C_s$ by the chord length C of the wind turbine blade, is larger than 0.05, the design lift coefficient $C_{Ldesign}$ can be more effectively reduce by setting the angle $\alpha$ to be 2°. Thus, in the trailing edge side panel according to (5) described above, the difference between the left and the right members can be reduced to a certain level, whereby the excellent blade efficiency can be achieved.

(6) In some embodiments, in the trailing edge side panel according to any one of (5) to (7) described above, the angle $\alpha$ is not less than 4°.

In the trailing edge side panel according to (6) described above, the design lift coefficient $C_{Ldesign}$ can be made small regardless of the value x. Thus, the difference between left and right members in Formula (1b) can be made small regardless of the value x, whereby the excellent blade efficiency can be achieved.

(7) In some embodiments, in the trailing edge side panel according to (6) described above, the angle $\alpha$ is not less than 8° and is not greater than 10°.

In the trailing edge side panel according to (7) described above, the difference between the left and the right members in Formula (1b) can be substantially eliminated, whereby the excellent blade efficiency can be achieved.

(8) In some embodiments, in the trailing edge side panel according to any one of (1) to (7) described above, an apex angle of each serration at the panel trailing edge is in a range of 30° $\pm$ 15°.

In the trailing edge side panel according to (8) described above, the noise of the wind turbine blade can be effectively reduced.

(9) In some embodiments, in the trailing edge side panel according to any one of (1) to (8) described above, the trailing edge side panel is attached to at least a part of a blade tip part of the wind turbine blade in which a ratio r/R of a radial direction position r to a radius R of the wind turbine blade is 0.85 to 1.0.

In the trailing edge side panel according to (9) described above, the other effects (the excellent blade efficiency is achieved and the wind load is prevented from increasing) according to (1) described above can be obtained while reducing the noise that is likely to be the problem at the blade tip part of the wind turbine blade.

According to at least one embodiment of the present invention, a trailing edge side panel is provided that can reduce noise of a wind turbine blade and at the same can achieve the excellent blade efficiency by preventing deviation from an optimum chord length.

BRIEF DESCRIPTION OF THE DRAWINGS

FIG. 1 is a schematic view of a wind turbine generator according to one embodiment.
FIG. 2 is a plan view showing a schematic configuration of a wind turbine blade according to one embodiment
FIG. 3 is a partially enlarged view of the wind turbine blade shown in FIG. 2.
FIG. 4 is a schematic cross-sectional view of the wind turbine blade shown in FIG. 2 taken along a line A-A (cross section orthogonal to a blade longitudinal direction).
FIG. 5 is a partially enlarged cross-sectional view of the wind turbine blade shown in FIG. 4, taken along the line A-A.
FIG. 6 is a diagram showing a result of numerical analysis on relationship between a value x and a value y for each angle $\alpha$.
FIG. 7 is a partially enlarged view showing a structure for attaching a trailing edge side panel according to one embodiment.
FIG. 8 is a partially enlarged view showing a structure for attaching the trailing edge side panel according to one embodiment.
FIG. 9 is a partially enlarged cross-sectional view of a trailing edge side panel according to one comparative example.
FIG. 10 is a partially enlarged cross-sectional view of a trailing edge side panel according to one comparative example.

DESCRIPTION OF THE PREFERRED EMBODIMENTS

Some embodiments of the present invention are described with reference to the attached drawings. It is intended, however, that dimensions, materials, shapes, relative positions, and the like of components described in the embodiments shall be interpreted as illustrative only and not limitative of the scope of the present invention.

For example, terms, such as "in a certain direction", "along a certain direction", "parallel to", "orthogonal to", "center of", "concentric", and "coaxial", representing relative or absolute arrangement do not only strictly represent such an arrangement, but also represent a state involving a tolerance or a relative change in an angle or a distance as long as the same function is provided.

For example, terms, such as "the same", "equal to", and "equivalent to", representing that matters are the same do not only represent that the matters are strictly the same state but also represent a state involving a tolerance or a difference as long as the same function is provided.

For example, terms such as rectangular and cylindrical representing shapes do not only represent shapes such as a rectangle and a cylinder in a geometrically strict sense, but also represent shapes including a recess, a protrusion, chamfering, and the like as long as the same effect can be obtained.

Furthermore, expressions such as "has", "having", "include", "including", and "comprising" used for one component are not exclusive expressions that deny the existence of other components.

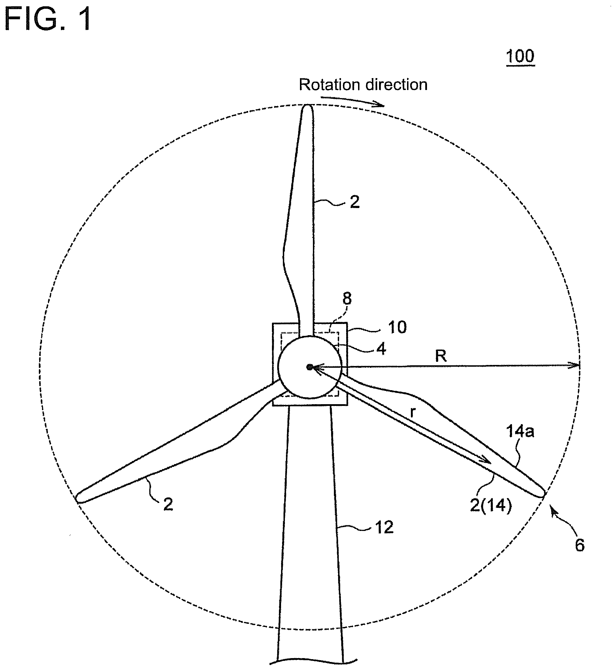

FIG. 1 is a schematic view of a wind turbine generator 100 according to one embodiment.

The wind turbine generator 100 shown in FIG. 1 includes: a wind turbine rotor 6 including at least one wind turbine blade 2 (second wind turbine blade) and a hub 4 to which the wind turbine blade 2 is attached; a generator 8 that converts rotational energy of the wind turbine rotor 6 into electrical energy; a nacelle 10 that supports the wind turbine rotor 6 and the generator 8; and a tower 12 that rotatably supports the nacelle 10. In an exemplary embodiment shown in FIG. 1, the wind turbine generator 100 includes three wind turbine blades 2.

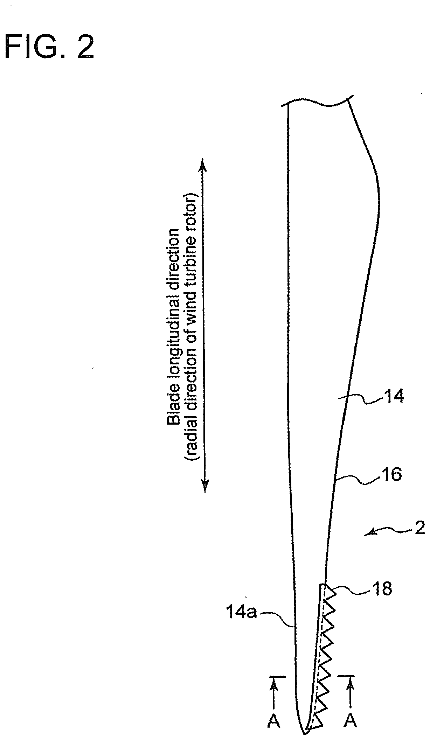

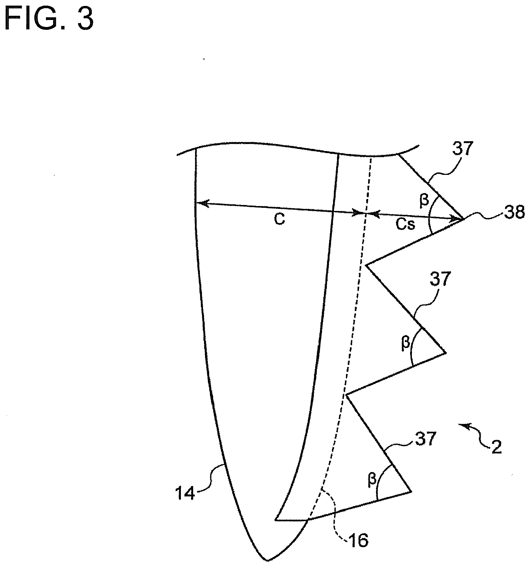

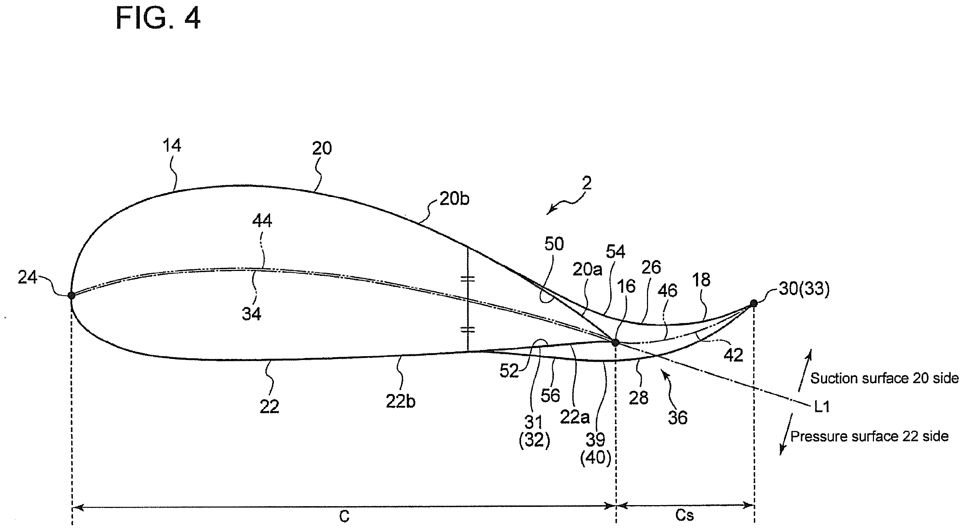

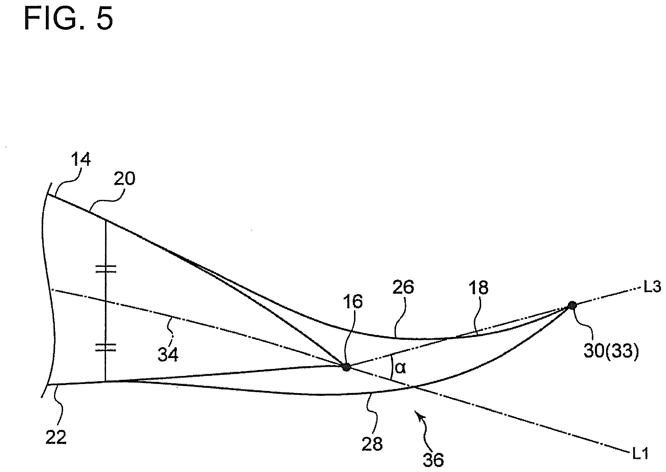

A configuration of the wind turbine blade 2 according to one embodiment is described below with reference to FIG. 2 to FIG. 5. FIG. 2 is a plan view showing a schematic configuration of the wind turbine blade 2 according to one embodiment. FIG. 3 is a partially enlarged view of the wind turbine blade 2 shown in FIG. 2. FIG. 4 is a schematic cross-sectional view of the wind turbine blade 2 shown in FIG. 2, taken along a line A-A (cross section orthogonal to the blade longitudinal direction). FIG. 5 is a partially enlarged cross-sectional view of the wind turbine blade 2 shown in FIG. 4, taken along the line A-A.

As shown in FIG.2 to FIG. 5, the wind turbine blade 2 includes: a wind turbine blade 14 (first wind turbine blade); and a trailing edge side panel 18 attached to a trailing edge 16 side of the wind turbine blade 14.

For example as shown FIG. 4, the wind turbine blade 14 includes: a suction surface 20; a pressure surface 22; and a leading edge 24 and the trailing edge 16 at which the suction surface 20 and the pressure surface 22 intersect with each other.

For example as shown FIG. 4, the trailing edge side panel 18 includes: a panel suction surface 26 which is disposed adjacent to the suction surface 20 of the wind turbine blade 14 in a state where the trailing edge side panel 18 is attached to the trailing edge 16 side of the wind turbine blade 14; a panel pressure surface 28 which is disposed adjacent to the pressure surface 22 of the wind turbine blade 14 in the state where the trailing edge side panel 18 is attached to the trailing edge 16 side of the wind turbine blade 14; and a panel trailing edge 30 where the panel suction surface 26 and the panel pressure surface 28 intersect with each other. For example, as shown in FIG. 2 and FIG. 3, the panel trailing edge 30 is formed to have serrations for reducing the noise of the wind turbine blade 14.

In one embodiment, the trailing edge side panel 18 is attached to at least a part of a blade tip part 14a of the wind turbine blade 14 in which a ratio r/R of a radial direction (the blade longitudinal direction) position r to a radius R of the wind turbine rotor 6 is 0.85 to 1.0 (see FIG. 1 and FIG. 2). Thus, the noise that is likely to be the problem at the blade tip part 14a of the wind turbine blade 14 can be reduced.

In one embodiment, as shown in FIG. 4 for example, the trailing edge side panel 18 includes: a suction surface side attachment surface 50 attached to a trailing edge side portion 20a of the suction surface 20 of the wind turbine blade 14; and a pressure surface side attachment surface 52 attached to a trailing edge side portion 22a of the pressure surface 22 of the wind turbine blade 14, and is attached to the wind turbine blade 14 in such a manner as to clamp the trailing edge 16 of the wind turbine blade 14. Here, a suction surface 54 of the wind turbine blade 2 is formed that includes: a leading edge side portion 20b as a portion of the suction surface 20 of the wind turbine blade 14 other than the trailing edge side portion 20a; and the panel suction surface 26. A pressure surface 56 of the wind turbine blade 2 is formed that includes: a leading edge side portion 22b as a portion of the pressure surface 22 of the wind turbine blade 14 other than the trailing edge side portion 22a; and the panel pressure surface 28.

By thus being attached to the wind turbine blade 14 in such a manner as to clamp the trailing edge 16 of the wind turbine blade 14, the trailing edge side panel 18 can be more rigidly attached, compared with a case where the trailing edge side panel is attached to one of the suction surface 20 and the pressure surface 22 of the wind turbine blade 14.

A condition is described that is preferably satisfied by the trailing edge side panel 18 to achieve the excellent blade efficiency with the chord length of the wind turbine blade 14 extended by attaching the trailing edge side panel 18.

Generally, to maximize the blade efficiency, the airfoil of the wind turbine blade preferably satisfies the following relation (1a):

$$ N \times \frac{C}{R} \times C_{Ldesign} \times \frac{r}{R} \times \lambda^2 = \frac{16}{9}\pi \quad (1a), $$

where N is the number of wind turbine blades of the wind turbine rotor, C is the chord length, R is a radius of rotation of the wind turbine rotor (see FIG. 1), $C_{Ldesign}$ is a design lift coefficient (a lift coefficient at an angle of attack achieving the maximum lift-to-drag ratio), r is a radius direction position (see FIG. 1) of the wind turbine rotor, and λ is a design tip speed ratio (ratio of a tip speed Ts at the tip of the wind turbine blade to an infinite upstream wind speed V).

At a certain radial direction position of the wind turbine blade, all the items other than C and $C_{Ldesign}$ are constant, and thus the formula can be simplified into the following Formula (1b):

$$ C \times C_{Ldesign} = \text{constant} \quad (1b). $$

Thus, the combination between the chord length C and the design lift coefficient $C_{Ldesign}$ that satisfies Formula (1b) is preferably selected to maximize the performance of the wind turbine blade.

The trailing edge side panel including the panel trailing edge formed to have the serrations can reduce the noise of the wind turbine blade. Here, the trailing edge side panel needs to extend the chord length C for a certain amount, to provide the noise reduction effect.

Thus, if the extended amount of chord length C is set to an amount with which the noise reduction effect can be provided with the design lift coefficient $C_{Ldesign}$ fixed, the left member in Formula (1b) is increased, and thus Formula (1b) might be failed to be satisfied.

Thus, as shown in FIG. 4 for example, in a cross section 36, orthogonal to the blade longitudinal direction (at least one cross section orthogonal to the blade longitudinal direction), of at least a partial area in the blade longitudinal direction in the state where the trailing edge side panel 18 is attached to the trailing edge side of the wind turbine blade 14, the panel trailing edge 30 is positioned on the suction surface 20 side of a first airfoil 32 defined by a contour 33 of the wind turbine blade 14 with respect to an extension line L1 that virtually extends from the trailing edge 16 of the wind turbine blade 14 as an extension of a camber line 34 of the first airfoil 32 (extension line obtained by virtually extending the camber line 34 from the trailing edge 16 in a tangent direction of the camber line 34 at the trailing edge 16). As shown in FIG. 4, in the state where the trailing edge side panel 18 is attached to the trailing edge 16 side of the wind turbine blade 14, a camber line 42 of a second airfoil 40 defined by an entire contour 39 of the wind turbine blade 14 and the trailing edge side panel 18 has an S shape defined by a first curved portion 44 and a second curved portion 46, the first curved portion 44 being positioned on a leading edge 24 side of the wind turbine blade 14 and protruding toward a suction surface 20 side, the second curved portion 46 being positioned on a panel trailing edge 30 side with respect to the first curved portion 44 and protruding toward a pressure surface 22 side to have a convex shape.

Thus, the turning angle of the second airfoil 40 becomes smaller than the turning angle of the first airfoil 32, whereby the design lift coefficient $C_{Ldesign}$ is reduced. Thus, even when the extended amount of the chord length C is set to an amount with which the noise reduction effect can be provided, the left member in Formula (1b) can be prevented from increasing, whereby the difference between the left and the right members in Formula (1b) can be made small. All things considered, the excellent blade efficiency can be achieved.

Because the turning angle of the second airfoil 40 becomes smaller than the turning angle of the first airfoil 32, the maximum lift coefficient (lift coefficient at the time of speed down) $C_{Lmax}$ can be prevented from increasing. Thus, a wind load applied to the wind turbine blade 14 from the wind can be prevented from increasing. Furthermore, the flowrate is high at a portion around the panel trailing edge 30 on the panel suction surface 26 side, and thus the thickness of the boundary layer can be prevented from increasing, whereby the noise can be reduced.

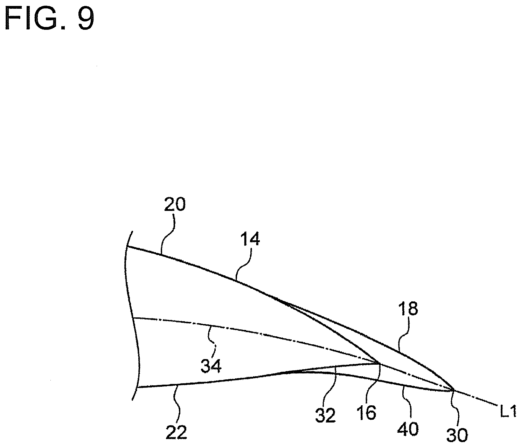

On the other hand, if the trailing edge side panel 18 is formed in such a manner that the panel trailing edge 30 is positioned on the extension line L1 of the camber line 34 of the first airfoil 32 as shown in FIG. 9, or if the panel trailing edge 30 is positioned on the pressure surface 22 side of the first airfoil 32 with respect to the extension line L1, the turning angle becomes large, and thus the design lift coefficient $C_{Ldesign}$ becomes large. As a result, the left member of Formula (1b) largely increases along the increase in the chord length C, and thus a large deviation from Formula (1b) occurs.

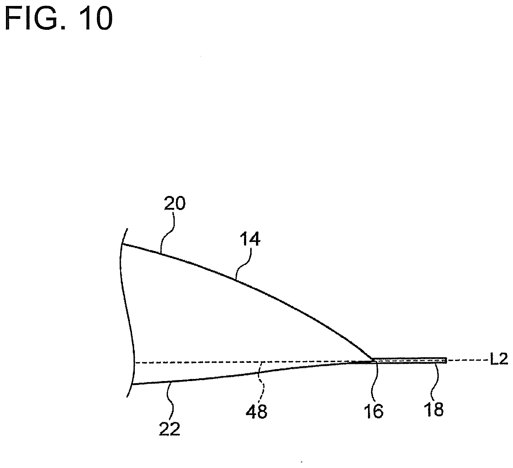

Furthermore, if the trailing edge side panel 18 having a flat plate shape is attached to the trailing edge 16 of the wind turbine blade 14 to extend on an extension line L2 of a chord 48 from the trailing edge 16 of the wind turbine blade 14 as shown in FIG. 10, the camber line is bent at the trailing edge 16 of the wind turbine blade 14 and thus, what value the design lift coefficient $C_{Ldesign}$ takes cannot be predicted, and the design lift coefficient $C_{Ldesign}$ might not be reduced depending on the shape of the trailing edge side panel 18. In other words, how the aerodynamic performance changes when the trailing edge side panel 18 is attached is unknown. Furthermore, when the trailing edge side panel 18 having the flat plate shape is attached, the pressure surface is bent at the trailing edge 16 of the wind turbine blade 14, causing partial separation which leads to the degradation of the aerodynamic performance due to the degradation of the lift-to-drag ratio, as well as production of noise due to vortex formation.

In one embodiment, as shown in FIG. 4 and FIG. 5 for example, the panel suction surface 26 is curved toward the panel pressure surface 28 in the cross section 36 orthogonal to the blade longitudinal direction to have the concave shape.

Thus, the suction surface 20 of the wind turbine blade 14 and the panel trailing edge 30 are smoothly connected to each other, and the panel trailing edge 30 can be positioned on the suction surface 20 side of the first airfoil 32 with respect to the extension line L1. As a result, the above described effects (the noise of the wind turbine blade is reduced, the excellent blade efficiency is achieved, and the wind load is prevented from increasing) can be obtained, while preventing the separation at the panel suction surface 26.

In one embodiment, as shown in FIG. 4 and FIG. 5 for example, in the cross section 36 orthogonal to the blade longitudinal direction, the panel pressure surface 28 is curved to a side opposite to the panel suction surface 26 to have the convex shape.

As described above, the panel pressure surface 28 is curved to have the convex shape in the cross section 36 orthogonal to the blade longitudinal direction. Thus, the pressure surface 22 of the wind turbine blade 14 and the panel trailing edge 30 can be smoothly connected to each other, and a certain amount of blade thickness can be ensured between the panel suction surface 26 having the concave shape and the panel pressure surface 28 having the convex shape. All things considered, the above described effects (the separation is prevented at the panel suction surface, the noise of the wind turbine blade is reduced, the excellent blade efficiency is achieved, and the wind load is prevented from increasing) can be obtained, while achieving an excellent structural strength.

In one embodiment, as shown in FIG. 3 for example, an apex angle $\beta$ of each serration 37 at the panel trailing edge 30 is preferably in a range of $30° \pm 15°$. Thus, the noise of the wind turbine blade 14 can be effectively reduced.

Other conditions preferably satisfied by the trailing edge side panel 18 to achieve the excellent blade efficiency are further described based on Formula (1a) described above.

When the chord length C of the wind turbine blade 14 is extended by $C_{ex}$ and the design lift coefficient $C_{Ldesign}$ changes by $\Delta C_L$ as a result of attaching the trailing edge side panel 18 to the wind turbine blade 14, a chord length $C + C_{ex}$ and a design lift coefficient (the design lift coefficient of the wind turbine blade) $C_{Ldesign} + \Delta C_L$ are obtained as a result of the extending. Here, $\Delta C_L$ takes a positive value when the design lift coefficient increases, and takes a negative value when the design lift coefficient decreases.

Thus, to maximize the blade efficiency with the second airfoil 40 (see FIG. 4), after the chord length is extended, the following relation (1c), obtained from Formula (1a) described above, is preferably satisfied:

$$N \times \frac{C + C_{ex}}{R} \times \left(C_{Ldesign} + \Delta C_L\right) \times \frac{r}{R} \times \lambda^2 = \frac{16}{9}\pi \quad (1c).$$

The following relation (1d) is obtained through simplification by obtaining the difference between Formula (1a) and Formula (1c):

$$\frac{\Delta C_{Ld}}{C_{Ld}} + \frac{C_{ex}}{C} + \frac{C_{ex}}{C} \times \frac{\Delta C_{Ld}}{C_{Ld}} = 0 \quad (1d).$$

When

$$\frac{C_{ex}}{C} = x \, , \quad \frac{\Delta C_{Ld}}{C_{Ld}} = y \, ,$$

Formula (1d) can be converted into the following Formula (1e):

$$y = -\frac{x}{1 + x} \quad (1e)$$

Thus, by making the difference between the left and the right members in Formula (1e) small, a higher blade efficiency can be achieved with the second foil 40 after the chord length is extended.

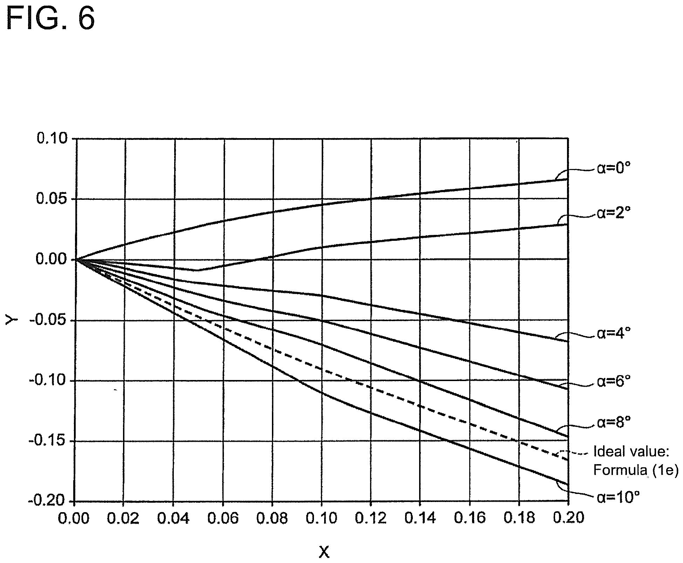

FIG. 6 shows a result of a numerical analysis on a relationship between the values x and y for each angle α between the extension line L1 and a straight line L3 connecting between the panel trailing edge 30 and the trailing edge 16 of the wind turbine blade 14 in the cross section 36 orthogonal to the blade longitudinal direction as shown in FIG. 5. In the analysis, 1/3 of a distance $C_s$ is approximated as the chord length extended amount $C_{ex}$ described above ($C_{ex}$ = 1/3$C_s$). The distance $C_s$ is a distance between an apex 38 of each serration 37 (see FIG. 3) at the panel trailing edge 30 and the trailing edge 16 of the wind turbine blade 14 in a chord direction of the wind turbine blade 14.

As shown in FIG. 6, by setting the angle α to be not less than 2°, a value can be more approximated to that obtained by Formula (1e) compared with a case where the angle α is set to 0°. Thus, the left member in Formula (1e) can be prevented from increasing even when the extended amount of the chord length C is set to be an amount with which the noise reduction effect can be obtained. Thus, the difference between the left and the right members in Formula (1e) can be made small. All things considered, the excellent blade efficiency can be achieved.

As shown in FIG. 6, the value y increases along with the increase in the value x greater than 0.05, even when the angle α is 2°. Thus, to improve the blade efficiency, the angle α is preferably greater than 2° when the value x is greater than 0.05. In particular, when the angle α is not less than 4°, the value y can take a negative value regardless of the value x in the result shown in FIG. 6 (design lift coefficient $C_{Ldesign}$ can be reduced). Thus, more preferably, the angle α is not less than 4°.

As shown in FIG. 6, the design lift coefficient $C_{Ldesign}$ close to an ideal value can be achieved by setting the angle α to be not less than 8° and not greater than 10°. Thus, the excellent blade efficiency can be achieved.

The present invention is not limited to the embodiments described above, and includes a modification of the embodiment described above, and an appropriate combination of these embodiments.

For example, in the exemplary embodiment shown in FIG. 3, the trailing edge side panel 18 includes the suction suface side attachment surface 50 and the pressure surface side attachment surface 52, and the trailing edge side panel 18 is attached to the wind turbine blade 14 in such a manner as to clamp the trailing edge 16. However, the structure for attaching the trailing edge side panel 18 to the wind turbine blade 14 is not limited to this.

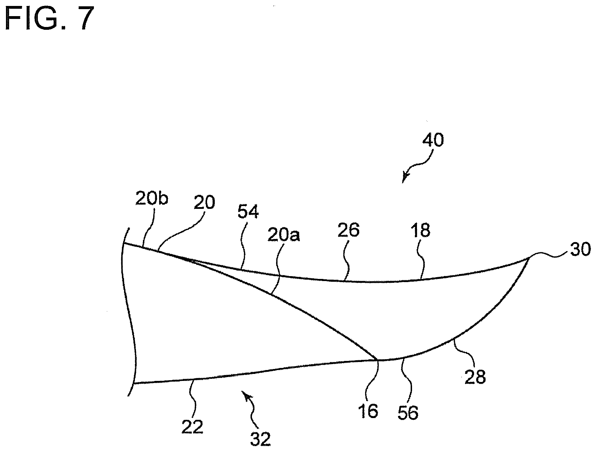

For example, as shown in FIG. 7, the trailing edge side panel 18, including the panel suction surface 26, the panel pressure surface 28, the panel trailing edge 30, and the suction surface side attachment surface 50, may not include the pressure surface side attachment surface 52. Here, the suction surface 54 of the wind turbine blade 2 is formed that includes: the leading edge side portion 20b as a portion of the suction surface 20 of the wind turbine blade 14 other than the trailing edge side portion 20a; and the panel suction surface 26. The pressure surface 56 of the wind turbine blade 2 is formed that includes: the entire pressure surface 22 of the wind turbine blade 14; and the panel pressure surface 28.

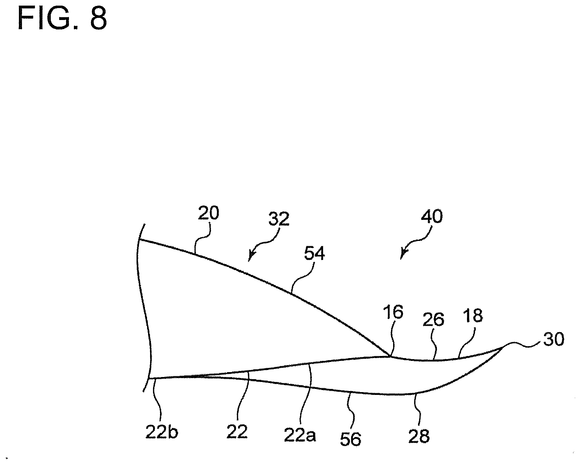

Alternatively, as shown in FIG. 8, the trailing edge side panel 18, including the panel suction surface 26, the panel pressure surface 28, the panel trailing edge 30, and the pressure surface side attachment surface 52, may not include the suction surface side attachment surface 50. Here, the suction surface 54 of the wind turbine blade 2 is formed that includes: the entire suction surface 20 of the wind turbine blade 14; and the panel suction surface 26. The pressure surface 56 of the wind turbine blade 2 is formed that includes: the leading edge side portion 22 as a portion of the pressure surface 22 of the wind turbine blade 14 other than the trailing edge side portion 22a; and the panel pressure surface 28.

EXPLANATION OF REFERENCE SIGNS

| | |
|---|---|
| 2 | wind turbine blade |
| 4 | hub |
| 6 | wind turbine rotor |
| 8 | generator |
| 10 | nacelle |
| 12 | tower |
| 14 | wind turbine blade |
| 14a | blade tip part |
| 16 | trailing edge |
| 18 | trailing edge side panel |
| 20 | suction surface |
| 20a | trailing edge side portion |
| 20b | leading edge side portion |
| 22 | pressure surface |
| 22a | trailing edge side portion |
| 22b | leading edge side portion |
| 24 | leading edge |
| 26 | panel suction surface |
| 28 | panel pressure surface |
| 30 | panel trailing edge |
| 31 | contour |
| 32 | first airfoil |
| 34 | camber line |
| 36 | cross section orthogonal to blade longitudinal direction |
| 37 | each serration |
| 38 | apex |
| 39 | entire contour |
| 40 | second airfoil |
| 42 | camber line |
| 44 | first curved portion |
| 46 | second curved portion |
| 48 | chord |
| 50 | suction surface side attachment surface |
| 52 | pressure surface side attachment surface |
| 54 | suction surface |
| 56 | pressure surface |
| 100 | wind turbine generator |

**Claims**

1. A trailing edge side panel (18) configured to be attached to a trailing edge side of a wind turbine blade (14) of a wind turbine rotor (6), the trailing edge side panel comprising:

a panel suction surface (26) which is disposed adjacent to a suction surface (20) of the wind turbine blade (14) in a state where the trailing edge side panel (18) is attached to the trailing edge side of the wind turbine blade (14);
a panel pressure surface (28) which is disposed adjacent to a pressure surface (22) of the wind turbine blade (14) in the state where the trailing edge side panel (18) is attached to the trailing edge side of the wind turbine blade (14); and
a panel trailing edge (30) where the panel suction surface (26) and the panel pressure surface (28) intersect with each other, wherein
the panel trailing edge (30) has serrations (37), and
**characterized in that** in the state where the trailing edge side panel (18) is attached to the trailing edge side of the wind turbine blade (14),

in a cross section (36), orthogonal to a blade longitudinal direction, of at least a partial area in the blade longitudinal direction, the panel trailing edge (30) is positioned on a suction surface side of a first airfoil (32) defined by a contour (31) of the wind turbine blade with respect to an extension line (L1) that virtually extends from the trailing edge (16) of the wind turbine blade as an extension of a camber line (34) of the first airfoil, and a camber line (42) of a second airfoil (40) defined by an entire contour (39) of the wind turbine blade and the trailing edge side panel has an S shape defined by a first curved portion (44) and a second curved portion (46), the first curved portion (44) being positioned on a leading edge (24) side of the wind turbine blade and protruding toward a suction side, the second curved portion (46) being positioned on a panel trailing edge side with respect to the first curved portion (44) and protruding toward a pressure side.

2. The trailing edge side panel (18) according to claim 1, wherein the panel suction surface (26) is curved to have a concave shape in the cross section (36) orthogonal to the blade longitudinal direction.

3. The trailing edge side panel (18) according to claim 2, wherein the panel pressure surface (28) is curved to have a convex shape in the cross section (36) orthogonal to the blade longitudinal direction.

4. The trailing edge side panel (18) according to any one of claims 1 to 3, wherein, in the cross section (36) orthogonal to the blade longitudinal direction in the state where the trailing edge side panel is attached to the trailing edge side of the wind turbine blade (14), an angle $\alpha$ is equal to or larger than 2°, the angle $\alpha$ being an angle between the extension line (L1) and a straight line (L3) that passes through the trailing edge (6) of the wind turbine blade and the panel trailing edge (30).

5. The trailing edge side panel (18) according to claim 4, wherein, in the cross section (36) orthogonal to the blade longitudinal direction in the state where the trailing edge side panel is attached to the trailing edge side of the wind turbine blade (14), a value x is larger than 0.05 and the angle $\alpha$ is larger than 2°, the value x being a value obtained by diving 1/3 of a distance Cs by a chord length C of the wind turbine blade, the distance Cs being a distance between an apex (38) of each serration (37) at the panel trailing edge (30) and the trailing edge (16) of the wind turbine blade in a chord direction of the wind turbine blade.

6. The trailing edge side panel (18) according to claim 4 or 5, wherein the angle $\alpha$ is not less than 4°.

7. The trailing edge side panel (18) according to claim 6, wherein the angle $\alpha$ is not less than 8° and is not greater than 10°.

8. The trailing edge side panel (18) according to any one of claims 1 to 7, wherein an apex angle ($\beta$) of each serration (37) at the panel trailing edge (30) is in a range of 30° $\pm$ 15°.

9. The trailing edge side panel (18) according to any one of claims 1 to 8, wherein the trailing edge side panel is attached to at least a part of a blade tip part of the wind turbine blade in which a ratio r/R of a radial direction position r to a radius R of the wind turbine blade is 0.85 to 1.0.


**Patentansprüche**

1. Hinterkantenseitenpaneel (18), das dafür konfiguriert ist, an einer Hinterkantenseite eines Windturbinenflügels (14) eines Windturbinenrotors (6) angebracht zu werden, wobei das Hinterkantenseitenpaneel umfasst:

eine Paneelsaugfläche (26), die neben einer Saugfläche (20) des Windturbinenflügels (14) angeordnet ist, wenn das Hinterkantenseitenpaneel (18) auf der Hinterkantenseite des Windturbinenflügels (14) angebracht ist,
eine Paneeldruckfläche (28), die neben einer Druckfläche (22) des Windturbinenflügels (14) angeordnet ist, wenn das Hinterkantenseitenpaneel (18) an der Hinterkantenseite des Windturbinenflügels (14) angebracht ist, und

eine Paneelhinterkante (30), wo die Paneelsaugfläche (26) und die Paneeldruckfläche (28) einander überschneiden, wobei

die Paneelhinterkante (30) Sägezahnungen (37) hat, und

**dadurch gekennzeichnet, dass**,

wenn das Hinterkantenseitenpaneel (18) an der Hinterkantenseite des Windturbinenflügels (14) angebracht ist, in einem Querschnitt (36), orthogonal zu einer Flügellängsrichtung, mindestens eines teilweisen Bereichs in der Flügellängsrichtung, die Paneelhinterkante (30) auf einer Saugflächenseite eines ersten Flügelprofils (32) positioniert ist, das durch eine Kontur (31) des Windturbinenflügels mit Bezug auf eine Verlängerungslinie (L1) definiert wird, die sich virtuell von der Hinterkante (16) des Windturbinenflügels als eine Verlängerung einer Wölbungslinie (34) der ersten Flügelprofils erstreckt, und

eine Wölbungslinie (42) eines zweiten Flügelprofils (40), das durch eine gesamte Kontur (39) des Windturbinenflügels und das Hinterkantenseitenpaneel definiert wird, eine S-Form aufweist, die durch einen ersten gekrümmten Abschnitt (44) und einen zweiten gekrümmten Abschnitt (46) definiert wird, wobei der erste gekrümmte Abschnitt (44) auf einer Vorderkanten (24)-Seite des Windturbinenflügels positioniert ist und in Richtung einer Saugseite hervorsteht, wobei der zweite gekrümmte Abschnitt (46) auf einer Paneelhinterkantenseite mit Bezug auf den ersten gekrümmten Abschnitt (44) positioniert ist und in Richtung einer Druckseite hervorsteht.

2. Hinterkantenseitenpaneel (18) nach Anspruch 1, wobei die Paneelsaugfläche (26) so gekrümmt ist, dass sie im Querschnitt (36) orthogonal zur Flügellängsrichtung eine konkave Form aufweist.

3. Hinterkantenseitenpaneel (18) nach Anspruch 2, wobei die Paneeldruckfläche (28) so gekrümmt ist, dass sie im Querschnitt (36) orthogonal zur Flügellängsrichtung eine konvexe Form aufweist.

4. Hinterkantenseitenpaneel (18) nach einem der Ansprüche 1 bis 3, wobei im Querschnitt (36) orthogonal zur Flügellängsrichtung, in dem Zustand, in dem das Hinterkantenseitenpaneel an der Hinterkantenseite des Windturbinenflügels (14) angebracht ist, ein Winkel $\alpha$ mindestens 2° beträgt, wobei der Winkel $\alpha$ ein Winkel zwischen der Verlängerungslinie (L1) und einer geraden Linie (L3) ist, die durch die Hinterkante (6) des Windturbinenflügels und die Paneelhinterkante (30) verläuft.

5. Hinterkantenseitenpaneel (18) nach Anspruch 4, wobei im Querschnitt (36) orthogonal zur Flügellängsrichtung, in dem Zustand, in dem das Hinterkantenseitenpaneel an der Hinterkantenseite des Windturbinenflügels (14) angebracht ist, ein Wert x größer als 0,05 ist und der Winkel $\alpha$ größer als 2° ist, wobei der Wert x ein Wert ist, der durch Teilen von 1/3 einer Distanz Cs durch eine Sehnenlänge C des Windturbinenflügels erhalten wird, wobei die Distanz Cs eine Distanz zwischen einem Scheitelpunkt (38) jeder Zahnung (37) an der Paneelhinterkante (30) und der Hinterkante (16) des Windturbinenflügels in einer Sehnenrichtung des Windturbinenflügels ist.

6. Hinterkantenseitenpaneel (18) nach Anspruch 4 oder 5, wobei der Winkel $\alpha$ nicht kleiner als 4° ist.

7. Hinterkantenseitenpaneel (18) nach Anspruch 6, wobei der Winkel $\alpha$ nicht kleiner als 8° und nicht größer als 10° ist.

8. Hinterkantenseitenpaneel (18) nach einem der Ansprüche 1 bis 7, wobei ein Öffnungswinkel ($\beta$) jeder Zahnung (37) an der Paneelhinterkante (30) in einem Bereich von 30° $\pm$15° liegt.

9. Hinterkantenseitenpaneel (18) nach einem der Ansprüche 1 bis 8, wobei das Hinterkantenseitenpaneel an mindestens einem Teil eines Flügelspitzenteils des Windturbinenflügels angebracht ist, wobei ein Verhältnis r/R einer radialen Richtungsposition r zu einem Radius R des Windturbinenflügels 0,85 bis 1,0 beträgt.

**Revendications**

1. Panneau du côté bord de fuite (18) configuré pour être fixé sur un côté de bord de fuite d'une pale d'éolienne (14) d'un rotor d'éolienne (6), le panneau du côté bord de fuite comportant :

une surface de dépression de panneau (26) qui est disposée de façon adjacente à une surface de dépression (20) de la pale d'éolienne (14) dans un état où le panneau du côté bord de fuite (18) est fixé sur le côté de bord de fuite de la pale d'éolienne (14) ;

une surface de pression de panneau (28) qui est disposée de façon adjacente à une surface de pression (22) de la pale d'éolienne (14) dans l'état où le panneau du côté bord de fuite (18) est fixé sur le côté de bord de fuite de la pale d'éolienne (14) ; et

un bord de fuite de panneau (30) où la surface de dépression de panneau (26) et la surface de pression de panneau (28) se coupent l'une l'autre, dans lequel

le bord de fuite de panneau (30) a des dents (37), et

**caractérisé en ce que**

dans l'état où le panneau du côté bord de fuite (18) est fixé sur le côté de bord de fuite de la pale d'éolienne (14), dans une section transversale (36), perpendiculaire à une direction longitudinale de pale, d'au moins une zone partielle dans la direction longitudinale de pale, le bord de fuite de panneau (30) est positionné sur un côté de surface de dépression d'un premier profil (32) défini par un contour (31) de la pale d'éolienne par rapport à une ligne d'extension (L1) qui s'étend virtuellement depuis le bord de fuite (16) de la pale d'éolienne comme une extension d'une ligne de cambrure (34) du premier profil, et

une ligne de cambrure (42) d'un deuxième profil (40) défini par un contour entier (39) de la pale d'éolienne et du panneau du côté bord de fuite a une forme de S définie par une première partie incurvée (44) et une deuxième partie incurvée (46), la première partie incurvée (44) étant positionnée sur un côté de bord d'attaque (24) de la pale d'éolienne et dépassant vers un côté de dépression, la deuxième partie incurvée (46) étant positionnée sur un côté de bord de fuite de panneau par rapport à la première partie incurvée (44) et dépassant vers un côté de pression.

2. Panneau du côté bord de fuite (18) selon la revendication 1, dans lequel la surface de dépression de panneau (26) est courbée pour avoir une forme concave dans la section transversale (36) perpendiculaire à la direction longitudinale de pale.

3. Panneau du côté bord de fuite (18) selon la revendication 2, dans lequel la surface de pression de panneau (28) est courbée pour avoir une forme convexe dans la section transversale (36) perpendiculaire à la direction longitudinale de pale.

4. Panneau du côté bord de fuite (18) selon l'une quelconque des revendications 1 à 3, dans lequel, dans la section transversale (36) perpendiculaire à la direction longitudinale de pale dans l'état où le panneau du côté bord de fuite est fixé sur le côté de bord de fuite de la pale d'éolienne (14), un angle $\alpha$ est égal ou supérieur à 2°, l'angle $\alpha$ étant un angle entre la ligne d'extension (L1) et une ligne droite (L3) qui passe par le bord de fuite (6) de la pale d'éolienne et le bord de fuite de panneau (30).

5. Panneau du côté bord de fuite (18) selon la revendication 4, dans lequel, dans la section transversale (36) perpendiculaire à la direction longitudinale de pale dans l'état où le panneau du côté bord de fuite est fixé sur le côté de bord de fuite de la pale d'éolienne (14), une valeur x est plus grande que 0,05 et l'angle $\alpha$ est plus grand que 2°, la valeur x étant une valeur obtenue en divisant 1/3 d'une distance Cs par une longueur de corde C de la pale d'éolienne, la distance Cs étant une distance entre un sommet (38) de chaque dent (37) au niveau du bord de fuite de panneau (30) et le bord de fuite (16) de la pale d'éolienne dans une direction de corde de la pale d'éolienne.

6. Panneau du côté bord de fuite (18) selon la revendication 4 ou 5, dans lequel l'angle $\alpha$ n'est pas inférieur à 4°.

7. Panneau du côté bord de fuite (18) selon la revendication 6, dans lequel l'angle $\alpha$ n'est pas inférieur à 8° et n'est pas supérieur à 10°.

8. Panneau du côté bord de fuite (18) selon l'une quelconque des revendications 1 à 7, dans lequel un angle au sommet ($\beta$) de chaque dent (37) au niveau du bord de fuite de panneau (30) est dans une plage de 30° $\pm$ 15°.

9. Panneau du côté bord de fuite (18) selon l'une quelconque des revendications 1 à 8, dans lequel le panneau du côté bord de fuite est fixé sur au moins une partie d'une partie de bout de pale de la pale d'éolienne dans laquelle un rapport r/R d'une position de direction radiale r sur un rayon R de la pale d'éolienne est de 0,85 à 1,0.

FIG. 1

# FIG. 2

Blade longitudinal direction (radial direction of wind turbine rotor)

14

16

2

18

14a

A

A

# FIG. 3

FIG. 4

# FIG. 5

# FIG. 6

# FIG. 7

FIG. 8

# FIG. 9

# FIG. 10

**EP 3 009 669 B1**

**Patent documents cited in the description**

- US 20030099546 A
- US 20130129519 A
- US 20120027590 A